# EUROPÄISCHE PATENTANMELDUNG

(11) **EP 1 708 132 A1**
(43) Veröffentlichungstag der Anmeldung: **04.10.2006**
(21) Anmeldenummer: 05006855.0
(22) Anmeldetag: 30.03.2005
(51) Int. Cl.: G06Q 10/00

(54) **Verfahren und System zum Managen von an unterschiedlichen Objekten von Mitarbeitern auszuführenden Tätigkeiten und Datenhandgerät**

(71) Anmelder: Engert & Partner GmbH & Co KG, 52072 Aachen (DE)
(72) Erfinder: Bischops, Horst Michael, Dr., 52078 Aachen (DE); Heinrichs, Dirk, 52372 Kreuzau (DE); Krausz, Michael, 52062 Aachen (DE)
(74) Vertreter: Sparing Röhl Henseler Patentanwälte European Patent Attorneys

(57) **Zusammenfassung**

Die Erfindung betrifft ein Verfahren zum Managen von an unterschiedlichen Objekten von Mitarbeitern auszuführenden Tätigkeiten in Echtzeit, bei dem für jeden Mitarbeiter und für jede Tätigkeit jeweils ein Profil in einem Server (4) gespeichert wird, Aufgabenpläne für durchzuführende Tätigkeiten computerunterstützt erstellt und im Server (4) gespeichert werden, für jeden Mitarbeiter ein mitgeführtes, elektrisch selbstversorgtes, drahtlos mit dem Server (4) kommunizierendes Datenhandgerät (7) bereitgestellt wird, das objektbezogen aufgerufen Tätigkeiten des jeweiligen Aufgabenplans entsprechend dem Profil des betätigenden Mitarbeiters, dem Profil der Tätigkeiten und dem Abarbeitungsstatus anzeigt, wobei optisch zwischen offenen, erledigten und unerledigten Tätigkeiten unterschieden werden kann, und von betätigenden Mitarbeitern durchgeführte Tätigkeiten als Erledigung in das Datenhandgerät (7) eingegeben, an den Server (4) weitergeleitet und dort dokumentarisch abgelegt werden, wobei von einem Mitarbeiter als durchgeführt in ein Datenhandgerät (7) eingegebene Tätigkeiten anderen Mitarbeitern bei entsprechendem objektbezogenem Aufruf vom Server (4) zur Verfügung gestellt werden, sowie ein entsprechendes System und ein Datenhangerät (7) dafür.

## Beschreibung

Die Erfindung betrifft ein Verfahren und ein System zum Managen von an unterschiedlichen Objekten von Mitarbeitern auszuführenden Tätigkeiten und ein Datenhandgerät.

Das Planen, Ausführen, Erfassen, Dokumentieren, Auswerten und/oder Abrechnen von Tätigkeiten, die von Mitarbeitern in produzierenden oder Dienstleistungsbetrieben an unterschiedlichen Objekten wie z.B. Personen oder Gegenständen auszuführen sind, ist zeitaufwendig, fehlerträchtig, komplex und inflexibel.

Beispielsweise ist auf dem Gebiet der stationären Pflege von Personen in Seniorenheimen folgender Ablauf üblich.

Bei der Aufnahme einer Person im Seniorenheim werden zunächst die Stammdaten wie Anamnese und Biographie sowie weitere die Person betreffende Informationen in einer zentralen Mappe schriftlich erfaßt. Nach dieser Informationssammlung werden anhand einer Bewertung des Ist-Zustands in mehreren Bereichen, beispielsweise entsprechend dem 13 Bereiche umfassenden AEDL-Pflegemodell nach Krohwinkel, Probleme erfaßt, beispielsweise im Bereich 2 "sich bewegen" des AEDL-Pflegemodells eine mangelhafte Beweglichkeit eines Arms, und jeweils Ziele, beispielsweise eine verbesserte Beweglichkeit des Arms, sowie Maßnahmen, beispielsweise eine Bewegungstherapie, zum Erreichen der Ziele definiert. Die Maßnahmen werden in Einzeltätigkeiten, beispielsweise bestimmte Übungen für den Arm zu bestimmten Zeitpunkten, aufgeschlüsselt und gegebenenfalls mit Ausführungshinweisen versehen in Zeilen eines Aufgabenplans eingetragen.

Die für eine Schicht verfügbaren Mitarbeiter des Seniorenheims werden ihrer Qualifikation, Berechtigung und Eignung entsprechend den Personen und den Tätigkeiten zugewiesen, um die Aufgabenpläne abzuarbeiten. Beispielsweise wird die Ausführung der Übungen für den Arm einem Physiotherapeuten und die Durchführung der Grundpflege einem Pfleger übertragen. Die Aufgabenpläne verbleiben dabei zentral in der Mappe, so daß sich die Mitarbeiter die Tätigkeiten merken oder diese in eine eigene Planung übertragen müssen. Nach Ausführung der Tätigkeiten sind diese entsprechend den gesetzlichen Vorgaben zeitnah zu dokumentieren. Hierzu werden die durchgeführten und die nicht durchgeführten Tätigkeiten in den Spalten der Aufgabenlisten in der Mappe markiert, z.B. abgehakt und mit einem Kürzel des jeweiligen Mitarbeiters versehen, und gegebenenfalls Besonderheiten notiert. Dieser Prozeß ist fehlerträchtig, da die Mappe zentral aufbewahrt wird und die Mitarbeiter die Aufgabenliste daher abschreiben oder sich merken müssen. Ferner ist, wenn am Ende eines Tages oder nach länger Zeit entsprechende Einträge in der Aufgabenliste vorgenommen werden, nicht sichergestellt, daß Einträge vergessen oder irrtümlich falsch vorgenommen werden. Zudem kann es vorkommen, daß Einträge und Bemerkungen ungenau oder mißverständlich formuliert sind. Eine zeitnahe, kontinuierliche, korrekte und aussagekräftige Dokumentation ist daher in der Praxis nicht immer möglich.

Da die ausgeführten Tätigkeiten nur an einer zentralen Stelle und zudem mit zeitlicher Verzögerung erfaßt werden, müssen den Mitarbeitern im Voraus Personen fest zugeteilt werden. Hierdurch wird eine flexible Reaktion auf sich verändernde Umstände, beispielsweise Engpässe bei der verfügbaren Arbeitsleistung erschwert. So kommt es zu Leerlauf bei Mitarbeitern, bei denen die Tätigkeiten schneller als geplant ausgeführt werden, und zu Mehrarbeit bei Mitarbeitern, bei denen Tätigkeiten wegen Komplikationen länger als geplant dauern. Eine flexible Neuzuteilung von Mitarbeitern zu Personen auf Bedarfsbasis in Echtzeit ist kaum möglich.

Ferner gestaltet sich die Auswertung schwierig. So ist insbesondere eine übersichtliche Darstellung zur Identifikation von Problemen und für eine Zielüberprüfung nur mit unverhältnismäßig hohem Aufwand möglich, da hierzu eine Vielzahl handschriftlicher Eintragungen und gegebenenfalls Berichte auf verschiedenen Seiten der zentralen Mappe korreliert werden müssen. Eine derartige Auswertung unterbleibt daher in der Praxis. Eine systematische Auswertung, die mehrere Personen betrifft, ist praktisch unmöglich.

Schließlich ist die genaue Abrechnung der ausgeführten Tätigkeiten aufwendig, da hierzu Informationen aus den Aufgabenlisten erfaßt und in ein Abrechnungssystem übertragen werden müssen. Auch die Material- und Medizinbeschaffung muß getrennt organisiert werden.

Mit dem Planen, Ausführen, Erfassen, Dokumentieren, Auswerten und Abrechnen ist derzeit ein erheblicher Zeitaufwand verbunden, der nicht zur eigentlichen Pflege verwendet werden kann. So binden diese Aufgaben typischerweise ein Viertel bis zu einem Drittel der Arbeitszeit von Pflegepersonal in stationären Pflegeeinrichtungen.

Der Erfindung liegt daher die Aufgabe zugrunde, ein Verfahren und ein System zum Managen von an unterschiedlichen Objekten von Mitarbeitern auszuführenden Tätigkeiten und ein Datenhandgerät dafür zu schaffen, die lückenloser, flexibler und einfacher sowie weniger anfällig für Fehler bei der Informationsweitergabe sind, die Mitarbeiter automatisiert unterstützen und weniger Arbeitskraft binden.

Diese Aufgabe wird entsprechend den Merkmalen des Anspruchs 1, 18 bzw. 31 gelöst.

Hierdurch wird ein Verfahren zum Managen von an unterschiedlichen Objekten von Mitarbeitern auszuführenden Tätigkeiten in Echtzeit geschaffen, bei dem für jeden Mitarbeiter und für jede Tätigkeit jeweils ein Profil in einem Server gespeichert wird, das die Berechtigung des Mitarbeiters für bestimmte Tätigkeiten bzw. Anforderungen an die Berechtigung des Mitarbeiters beschreibt, Aufgabenpläne für durchzuführende Tätigkeiten entsprechend vorbestimmten Vorgaben computerunterstützt erstellt und im Server gespeichert werden, für jeden Mitarbeiter ein mitgeführtes, elektrisch selbstversorgtes, drahtlos mit dem Server kommunizierendes Datenhandgerät, das jeweils ein Display und eine Dateneingabevorrichtung aufweist, bereitgestellt wird, das objektbezogen aufgerufen im Display offene Tätigkeiten des jeweiligen Aufgabenplans entsprechend dem Profil des betätigenden Mitarbeiters, dem Profil der Tätigkeiten und dem Abarbeitungsstatus anzeigt, und von betätigenden Mitarbeitern durchgeführte Tätigkeiten als Erledigung in das Datenhandgerät eingegeben, im Display angezeigt, an den Server weitergeleitet und dort dokumentarisch abgelegt werden, wobei von einem Mitarbeiter als durchgeführt in ein Datenhandgerät eingegebene Tätigkeiten anderen Mitarbeitern bei entsprechendem objektbezogenem Aufruf vom Server zur Verfügung gestellt werden.

Das Verfahren ist insbesondere in Pflegeeinrichtungen wie Seniorenheimen und Krankenhäusern einsetzbar. Es kann darüber hinaus zweckmäßigerweise überall dort eingesetzt werden, wo ein Mitarbeiterpool Objekten qualifikationsbasiert und flexibel zugeordnet werden muß, da beispielsweise allenfalls statistisch vorhersehbare, fallweise anfallende Probleme und Änderungen bei in einem wiederkehrenden Zeitraster auszuführenden Tätigkeiten zu berücksichtigen sind. Das Verfahren ist daher auch bei Zeitarbeitsfirmen, in Fabrikhallen, bei Gebäudemanagementdiensten usw. einsetzbar.

Durch die zentrale Speicherung, den dezentralen Zugriff und die Verfügbarkeit aktueller Informationen in Echtzeit, d.h. zeitlich schritthaltend mit dem Dienstleistungs- oder Produktionsprozeß, sind Aufgabenpläne automatisiert erstellbar, die entsprechend dem Profil des betätigenden Mitarbeiters, d.h. insbesondere seiner Qualifikation, seiner Berechtigung und/oder seiner Eignung für die Durchführung von Tätigkeiten, entsprechend dem Profil der Tätigkeiten, in dem die entsprechenden Anforderungen an einen Mitarbeiter beschrieben sind, und entsprechend dem Abarbeitungsstatus nur in einem Zeitraum tatsächlich anfallende Tätigkeiten umfassen. Das Planen, Ausführen, Erfassen, Dokumentieren, Auswerten und Abrechnen der Tätigkeiten ist nunmehr automatisiert und dadurch lückenloser, flexibler und einfacher sowie infolge der unmittelbaren elektronischen Informationsweitergabe anstelle einer Kommunikation über Papier und Gedächtnis weniger anfällig für Fehler, wodurch im Ergebnis erheblich weniger Arbeitskraft für die gleichen Tätigkeiten verwendet werden muß.

Zudem ist durch die Profile sichergestellt, daß Mitarbeitern nur Ihrer Qualifikation, ihrer Berechtigung und/oder ihrer Eignung entsprechende Tätigkeiten zugeteilt werden.

Die Aufgabenpläne werden zweckmäßigerweise unter Zugriff auf einen zentralen Systemkatalog mit strukturiert abrufbaren Tätigkeiten zusammengestellt. Beispielsweise enthält der Systemkatalog in einer dem AEDL-Pflegemodell entsprechenden Struktur Tätigkeiten, die bei der Pflegeplanung automatisiert und gegebenenfalls unter Ergänzung von Ausführungshinweisen zusammenstellbar und zeitlich planbar sind. Hierdurch wird die Erstellung der Aufgabenpläne und insbesondere die Pflegeplanung erheblich vereinfacht und sichergestellt, daß zumindest alle üblichen Tätigkeiten berücksichtigt werden.

Die offenen, erledigten und unerledigten Tätigkeiten eines Aufgabenplans werden zweckmäßigerweise optisch unterscheidbar und insbesondere in Zeilen angezeigt, die bei offenen Tätigkeiten in einer neutralen Farbe, bei erledigten Tätigkeiten grün und bei unerledigten Tätigkeiten rot markiert sind. Hierdurch ist der Status des Aufgabenplans mit einem Blick erfaßbar.

Zum Ändern des Status einer Tätigkeit wird zweckmäßigerweise der Status "erledigt" und der Status "unerledigt" zur Auswahl angezeigt. Hierdurch sind die durchgeführten Arbeiten effizient protokollierbar.

Zweckmäßigerweise können einer Tätigkeit Bemerkungen handschriftlich und/oder als Sprachnotiz hinzugefügt werden. Hierdurch sind auch unvorhergesehene Ereignisse protokollierbar. Zudem wird die spätere Auswertung erleichert.

Zweckmäßigerweise werden nach Abarbeiten der Aufgabenpläne zu den Bemerkungen Strukturierungsvorschläge auf Basis der jeweiligen Pflegemaßnahme zur Auswahl durch einen Mitarbeiter von einem Computer automatisiert vorgeschlagen. Hierdurch ergibt sich eine Steigerung der Effizienz der Dokumentation der ausgeführten Tätigkeiten. Zudem werden aussagekräftige und genaue Formulierungen zur Steigerung der Qualität der Dokumentation sichergestellt.

Es kann vorgesehen sein, erreichte Ziele aufgerechnet gegen unerreichte Ziele als Funktion der Zeit in einer Graphik auf einem Datenhandgerät darzustellen. Hierdurch wird eine Beurteilung, ob die Tätigkeiten wirksam sind oder geändert werden müssen, um bestimmte Ziele zu erreichen, erleichtert.

Es kann vorgesehen sein, auf Basis der dokumentarisch im Server abgelegten Eingaben den Fortschritt der Abarbeitung der Aufgabenpläne für Objekte entsprechend vorgegebenen Kriterien, beispielsweise nach räumlicher Anordnung, in einer Graphik auf einem Datenhandgerät anzuzeigen. Hierdurch kann der Mitarbeitereinsatz flexibel an sich ändernde Anforderungen angepaßt werden, insbesondere von einer Station Mitarbeiter abgezogen und auf eine andere Station verlegt werden.

Zweckmäßigerweise werden die dokumentarisch im Server abgelegten Eingaben zur Abrechnung der ausgeführten Tätigkeiten, zur Materialbeschaffung und/oder Dokumentation mit einem vorgegebenen Automatisierungsgrad verwendet. Hierdurch ergeben sich erhebliche Zeiteinsparungen und die Fehleranfälligkeit dieser Tätigkeiten wird verringert.

Zur drahtlosen Kommunikation zwischen den Datenhandgeräten und dem Server wird zweckmäßigerweise ein lokales Funknetz, z.B. ein WLAN-Funknetz, verwendet. Dieses ist kostengünstig mit Standardkomponenten aufbaubar.

Zur drahtlosen Kommunikation zwischen den Datenhandgeräten und dem Server kann auch ein globales Funknetz, z.B. das Handynetz, verwendet werden. Hierdurch können die Objekte räumlich weiter voneinander entfernt sein, wie es beispielsweise im Außendienst und insbesondere bei der mobilen häuslichen Pflege der Fall ist.

Lokale und globale Funknetze können gemeinsam genutzt werden, um ein hybrides Funknetz zu schaffen. Hierdurch können Mitarbeiter flexibel zwischen einem stationärem Einsatz beispielsweise in einem Pflegeheim und einem Außendiensteinsatz beispielsweise zur Betreuung einer Person in ihrer eigenen Wohnung wechseln.

Zweckmäßigerweise werden Datenhandgeräte verwendet, bei denen die Dateneingabevorrichtung und das Display eine berührungsempfindliche Einheit bilden, die mittels eines Stifts handschriftliche Eingaben ermöglicht. Hierdurch ist eine intuitive Bedienung möglich.

Zweckmäßigerweise werden den Objekten von den Datenhandgeräten abfragbare Transponder zugeordnet. Hierdurch ist ein Objekt ohne Benutzereingabe fehlerfrei und einfach identifizier- und die Aufgabenliste in Reaktion auf die Identifizierung unmittelbar anzeigbar.

Zweckmäßigerweise wird der Ort der Datenhandgeräte festgestellt. Hierdurch ist es jederzeit möglich festzustellen, wo die Mitarbeiter sich befinden.

Zweckmäßigerweise sendet der Server zum Alarmieren eines Datenhandgeräts unaufgefordert Daten an das Datenhandgerät. Hierdurch können gegebenenfalls mehrere Mitarbeiter mit eiligen Informationen versorgt werden und insbesondere im Notfall unmittelbar eine neue Aufgabenliste erhalten.

Zweckmäßigerweise wird der Einsatz von Mitarbeitern an zu betreuenden Personen in einem Seniorenheim verwaltet.

Zweckmäßigerweise wird eine Informationssammlung, eine Planung von Aufgaben basierend auf gesammelten Informationen, eine Erfassung durchgeführter Tätigkeiten unter Verwendung der Datenhandgeräte, eine Evaluation der Wirksamkeit der durchgeführten Tätigkeiten nebst Anpassung der Planung und/oder eine Auswertung der durchgeführten Tätigkeiten durchgeführt.

Ferner werden ein entsprechendes System und ein elektrisch selbstversorgtes Datenhandgerät mit einem Display und einer Dateneingabevorrichtung zur drahtlosen Kommunikation mit dem System geschaffen.

Weitere Ausgestaltungen der Erfindung sind der nachfolgenden Beschreibung und den Unteransprüchen zu entnehmen.

Die Erfindung wird nachstehend anhand von in den beigefügten Figuren dargestellten Ausführungsbeispielen näher erläutert.

Fig. 1 illustriert ein erfindungsgemäßes System am Beispiel eines Seniorenheims.

Fig. 2 zeigt schematisch den Aufbau eines erfindungsgemäßen Systems.

Fig. 3 illustriert ein erfindungsgemäßes Datenhandgerät für das System der Fig. 1.

Fig. 4 illustriert Verfahrensabläufe in einem Seniorenheim.

Fig. 5 illustriert ein erfindungsgemäßes Verfahren.

Fig. 6 und 7 zeigen Graphiken für jeweils verschiedene Auswertungen.

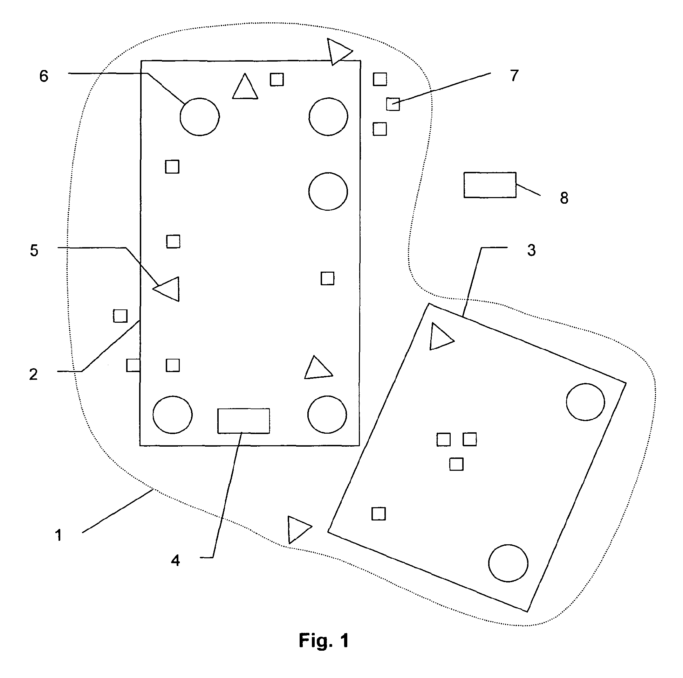

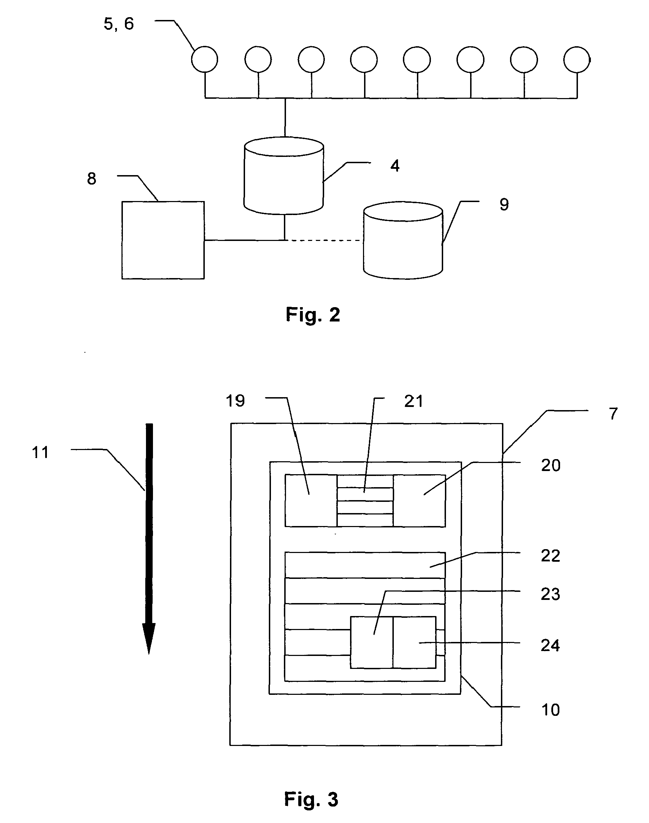

Das in Fig. 1 dargestellte System zum Managen von an unterschiedlichen Objekten von Mitarbeitern auszuführenden Tätigkeiten in Echtzeit, d.h. zumindest schritthaltend mit dem jeweiligen Dienstleistungs- oder Produktionsprozeß, ist in einem hier begrenzten Raumbereich 1 umfassend den Innenbereich und gegebenenfalls die unmittelbar angrenzende Umgebung beispielsweise eines Seniorenheims 2, eines Krankenhauses, einer Fabrikhalle od. dgl. einschließlich eines angeschlossenen Parks 3, Parkplatzes, Lagers od. dgl. realisiert. Verteilt über den Raumbereich 1 sind mehrere mit einem Server 4 zweckmäßigerweise über ein LAN verbundene und hier durch diesen gesteuerte Sender 5 und Empfänger 6 zur drahtlosen Kommunikation mit elektrisch selbstversorgten Datenhandgeräten 7, die durch Mitarbeiter, hier Pflegepersonal, bedient werden. Der Server 4 kann einen oder mehrere Computer oder ein Computernetzwerk od.dgl. umfassen, ist zweckmäßigerweise an ein vorhandenes Computersystem 8 zur Stammdatenverwaltung angekoppelt und weist zudem gegebenenfalls Schnittstellen für weitere vorhandene Computersysteme 9 zur Abrechnung, Heimverwaltung usw. auf, vgl. Fig. 2. Die Sender 5 und die Empfänger 6 können auch kombinierte Sendeempfänger sein.

Im Server 4 oder gegebenenfalls im Computersystem 8, 9 sind Stammdaten über im Raumbereich 1 anwesende Personen, die Senioren, sowie weitere Informationen zentral gespeichert. Die Stammdaten und Informationen umfassen zweckmäßigerweise die Biographie und die Anamnese der Personen sowie Pflegedaten wie etwa täglich durchzuführende Pflegemaßnahmen, Untersuchungen usw. und/oder die Protokollierung durchgeführter Pflegemaßnahmen, der darauf verwendeten Zeit usw. Vorzugsweise sind hier auch Profile des Pflegepersonals gespeichert sowie ein Schichtplan.

Der Zugriff auf die im Server 4 gespeicherten Daten erfolgt über die Datenhandgeräte 7, vgl. Fig. 3. Diese sind insbesondere Personal Digital Assistants (PDAs) wie sie z.B. von der Firma Palm angeboten werden und umfassen eine Bildwiedergabevorrichtung 10 insbesondere in Form eines hintergrundbeleuchteten Farb-LC-Displays und gegebenenfalls eine Tonwiedergabevorrichtung. Zur Steuerung durch den Benutzer ist zweckmäßigerweise eine berührungsempfindliche Displayoberfläche vorgesehen, über die mit einem Stift 11 handschriftlich Eingaben erfolgen können. Gegebenenfalls sind verschiedene Datenhandgeräte 7 gleichzeitig im Einsatz, beispielsweise kleine, ständig mitführbare PDAs für die Visite sowie größere PDAs oder TabletPCs, die eine große berührungsempfindliche Bildwiedergabevorrichtung 10 umfassen und insbesondere raumgebunden beispielsweise zur Planung und Auswertung eingesetzt werden. Ferner ist in jedem Datenhandgerät 7 ein Empfänger und ein Sender eingebaut, die zusammen über die Sender 5 und Empfänger 6 den drahtlosen Datenaustausch mit dem Server 4 ermöglichen. Die Datenhandgeräte 7 können auch mit einer Lesevorrichtung für RFID-Transponder versehen sein, um beispielsweise Räume, Personen und/oder Medikamente u.dgl. automatisiert zu identifizieren. Ferner können eine Kamera oder andere zusätzliche Einrichtungen, beispielsweise ein Mobiltelefon, in den Datenhandgeräten integriert sein.

Der Datenaustausch erfolgt hier über standardisierte Protokolle. Die über die Dienste des Servers 4 bereitgestellten Informationen werden dann auf den Datenhandgeräten 7 angezeigt. Zugleich kann der Server 4 die Befehle und Daten, die auf den Datenhandgeräten 7 eingegeben werden, auf dem gleichen Weg entgegennehmen und bearbeiten.

Zur drahtlosen Kommunikation sind verschiedene Funkinfrastrukturen verwendbar, z.B. ein lokales WLAN-Netzwerk mit eigenem Server und Intranet oder ein globales GPRS-(Handy)-Netzwerk mit einem zentralen Server, auf den über das Internet und/oder ein VPN (Virtual Private Network) zugegriffen wird. Die Datenhandgeräte 7 sind gegebenenfalls Mobiltelefone oder mit GPRS-Empfängern und -Sendern ausgerüstete PDAs od. dgl. und empfangen von einem zentralen Server über das GPRS-(Handy)-Netz lokal begrenzt Datenströme und weitere Daten. Die Funkinfrastruktur kann so ausgelegt sein, daß der Ort jedes Datenhandgeräts 7 im Raumbereich 1 eindeutig feststellbar ist. Im Fall einer vorübergehenden Störung der Serververbindung können die Dienste jedoch temporär auch auf den Datenhandgeräten 7 ablaufen.

Andere Protokolle und Funkinfrastrukturen sind ebenfalls verwendbar. Zudem sind ist bei einem Mischbetrieb, bei dem mehrere Protokolle und/oder Funkinfrastrukturen innerhalb des Raumbereichs 1 oder mehrerer getrennter Raumbereiche gleichzeitig verwendet werden, der Einsatzbereich erheblich vergrößert. So können die Datenhandgeräte 7 im Seniorenheim 2 auf WLAN-Basis und bei der häuslichen Pflege über das GPRS-Netz mit dem Server 4 kommunizieren.

Die Kommunikation zwischen den Datenhandgeräten 7 und dem Server 4 erfolgt zweckmäßigerweise bidirektional. Dadurch können die Datenhandgeräte 7 auf Dienste und Daten des Servers 4 zugreifen, und der Server 4 kann insbesondere zur Alarmierung von Pflegepersonal eines oder mehrere der Datenhandgeräte 7 unaufgefordert mit Informationen versorgen. Hierzu sind die zweckmäßigerweise eine eindeutige Kennung aufweisenden Datenhandgeräte 7 mit einer Funktionalität zur akustischen und/oder optischen Anzeige einer derartigen Alarmierung ausgestaltet. Ist der Ort der Datenhandgeräte 7 im Raumbereich 1 durch entsprechende Ausgestaltung der Funkinfrastruktur feststellbar, kann die Auswahl des zu alarmierenden Pflegers anhand der örtlichen Nähe zum Einsatzort erfolgen. Zudem basiert die Auswahl zweckmäßigerweise auf einem im Server 4 gespeicherten Profil.

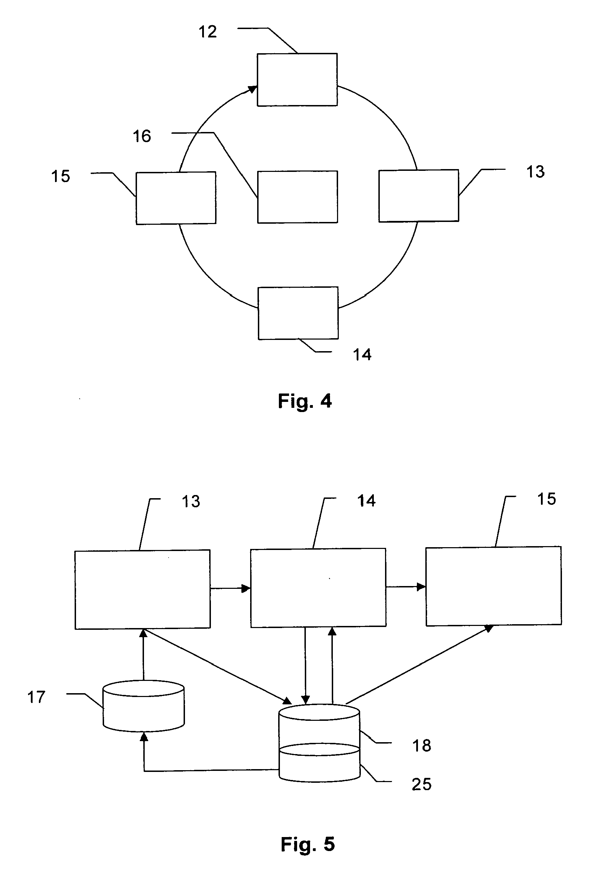

Die Verfahrensabläufe im Seniorenheim 2 umfassen hier zweckmäßigerweise eine Informationssammlung 12, eine Pflegeplanung 13, eine Leistungserbringung 14, eine Evaluation 15 und/oder eine Auswertung 16, vgl. Fig. 4.

Bei der Informationssammlung 12 werden beispielsweise die Stammdaten über TabletPCs erfaßt.

Zur Pflegeplanung 13 bedienen sich die Mitarbeiter zweckmäßigerweise ebenfalls der TabletPCs und greifen, vgl. Fig. 5, auf einen zentralen Systemkatalog 17 des Servers 4 zu, in dem beispielsweise nach dem AEDL-Pflegemodell strukturiert abrufbare Tätigkeiten gespeichert sind. Computergestützt werden die einzelnen Bereiche des AEDL-Pflegemodells abgearbeitet, um Probleme zu erfassen, Ressourcen, Ziele und Maßnahmen zu definieren und katalogbasiert entsprechende Tätigkeiten auszuwählen und gegebenenfalls mit Ausführungshinweisen zu ergänzen. So werden individuelle Aufgabenpläne 18 für die Personen zusammengestellt.

Für die Leistungserbringung 14 bedienen sich die Mitarbeiter der ständig mitgeführten Datenhandgeräte 7, um die jeweils auszuführenden Tätigkeiten abzurufen und zu protokollieren sowie Bemerkungen insbesondere handschriftlich über eine Schrifterkennung zu verfassen.

Hierzu wird auf die im Server 4 gespeicherten individuelle Aufgabenpläne 18 beispielsweise wie folgt zugegriffen. Beim Betreten des Zimmers eines Seniors ruft der jeweilige Mitarbeiter, der sich zweckmäßigerweise am mitgeführten Datenhandgerät 7 beispielsweise über einen Code identifiziert hat, einen den Senior betreffenden Datensatz beim Server 4 ab. Dies kann durch Eingabe der Zimmernummer, des Namens oder gegebenenfalls Erfassen eines im Zimmer oder beim Senior angeordneten RFID-Transponders erfolgen. Der Mitarbeiter erhält damit Kenntnis über den Namen und eventuelle Erkrankungen des Seniors. Auf dem Display 10 des Datenhandgeräts 7 werden daraufhin zweckmäßigerweise ein Bild 19 des Seniors, ein Bild 20 des Mitarbeiters und der Name und weitere wichtige Informationen 21 angezeigt, vgl. Fig. 3. Der Server 4 stellt unter Berücksichtigung des Profils des betätigenden Mitarbeiters eine Liste auszuführender Tätigkeiten für eine Anzeige auf dem Display 10 des Datenhandgeräts 7 bereit. Ist der Mitarbeiter beispielsweise eine Pflegekraft, werden die Tätigkeiten, die durch Pflegekräfte, durchzuführen sind, bereitgestellt, während dann, wenn der Mitarbeiter beispielsweise ein Physiotherapeut ist, nur Tätigkeiten bereitgestellt werden, die durch Physiotherapeuten durchgeführt werden.

Die Tätigkeiten werden vorzugsweise in Zeilen 22 angezeigt, wobei hier offene Tätigkeiten in grau, erledigte Tätigkeiten grün und unerledigte Tätigkeiten rot markiert und zweckmäßigerweise sortiert werden. Die Tätigkeiten umfassen beispielsweise Grundwäsche, Ausscheidung kontrollieren, Medizin verabreichen usw. Nachdem eine Tätigkeit durchgeführt worden ist, ändert der Mitarbeiter den jeweiligen Status. Hierzu wählt er durch Antippen der berührungsempfindlichen Oberfläche des Displays mit dem Stift 11 die Schaltfläche 23 "erledigt" oder die Schaltfläche 24 "unerledigt" aus, oder betätigt gegebenenfalls entsprechende feste oder frei belegbare Tasten. Die Eingabe wird automatisch betreffend Zeitpunkt und Pflegekraft protokolliert und an den Server 4 weitergeleitet. Ab diesem Zeitpunkt steht sie allen anderen Mitarbeitern zum Abruf zur Verfügung. Gegebenenfalls können zusätzlich durchgeführte Tätigkeiten eingegeben und zur Änderung des Aufgabenplans Vorschläge im Server 4 gespeichert bzw. bei ausreichender Autorisierung des Mitarbeiters der Aufgabenplan direkt geändert werden. Wenn sich ein Problem ergibt, kann der Mitarbeiter direkt auf weitere im Server 4 gespeicherte Informationen, beispielsweise ältere Befunde od.dgl., betreffend den Senior zugreifen, um das Problem vor Ort zu lösen oder Hilfe anfordern, insbesondere einen Alarm absetzen. Nach Abschluß des Aufgabenplans für den Senior kann der Mitarbeiter über das mitgeführte Datenhandgerät 7 seinen nächsten Einsatz abfragen. Die Pflegemaßnahmen sind damit individuell vorgegeben, werden automatisch auch hinsichtlich des Zeitaufwands protokolliert und können von der Pflegekraft insbesondere handschriftlich und/oder durch eine Sprachnotitz kommentiert und gegebenenfalls direkt an geänderte Bedingungen angepaßt werden. Gegebenenfalls können hierbei auch Ergänzungen 25, vgl. Fig. 5, für den individuellen Aufgabenplan 18 erstellt werden, die, sofern sie noch nicht im Systemkatalog 17 enthaltene Tätigkeiten umfassen, bei Bedarf direkt oder später bei der Auswertung auch in den Systemkatalog 17 einpflegbar sind.

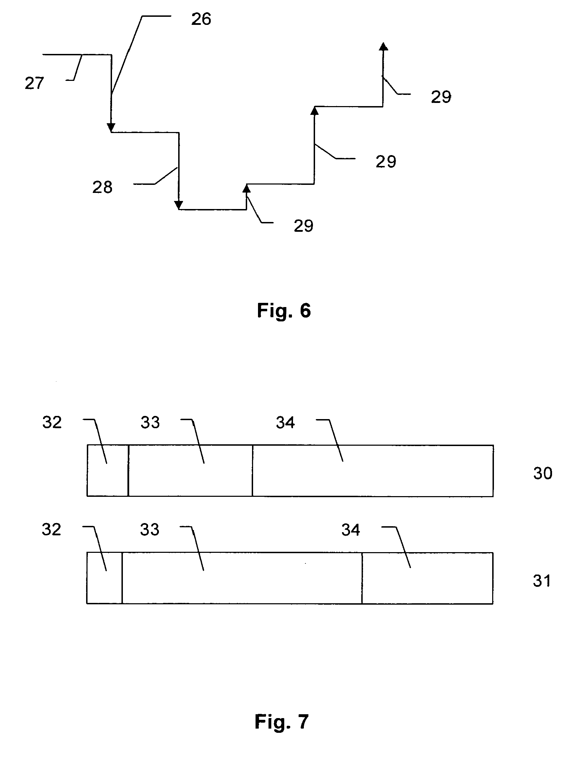

In regelmäßigen Abständen findet die Evaluation 15 statt, bei der die Pflegemaßnahmen insbesondere in Bezug auf ihre Wirksamkeit ausgewertet und die Ziele überprüft werden. Der gesamte Datenbestand kann dazu insbesondere nach graphischer Aufbereitung verwendet werden. So kann z.B. jederzeit die Anzahl der erreichten Ziele mit den nicht erreichten Zielen als Indiz für die Zweckmäßigkeit der Tätigkeiten in Beziehung gesetzt werden. Im in Fig. 6 dargestellten Beispiel illustriert der Pfeil 26, daß am Ende eines Beobachtungszeitraums 27 mehr Ziele nicht erreicht werden konnten. Gleiches gilt für den Pfeil 28 am Ende des nachfolgenden Beobachtungszeitraums. Nach Ausarbeitung eines angepaßten Pflegeplans ist die Bilanz wieder positiv, vgl. die Pfeile 29. Mit einer derartigen graphischen Darstellung ist eine Maßnahmeneffektivität überprüfbar.

Zur automatisierten Auswertung 16 wird auf die im Server 4 gespeicherten Daten zugegriffen. Die Auswertung 16 erfolgt dabei zweckmäßigerweise über TabletPCs. Hier können Schichten unter Berücksichtigung der erledigten und offenen Tätigkeiten und besonderen Ereignisse ausgewertet werden, eine Schichtübergabe vorgenommen werden, ausführliche Berichte geschrieben und gegebenenfalls Überleitungsbögen an ein Krankenhaus erstellt werden.

Die Berichte werden dabei zweckmäßigerweise computergestützt verfaßt. Zu den Bemerkungen werden unter Berücksichtigung der jeweiligen Tätigkeit, zu der sie vom Mitarbeiter verfaßt worden sind, in einem Dokumentierungskatalog gespeicherte passende Textbausteine vorgeschlagen, die gegebenenfalls nach Ergänzung oder Anpassung in den Bericht übernommen werden.

Ferner können die Tätigkeitsverteilung in Echtzeit analysiert und der Mitarbeitereinsatz optimiert werden, vgl. Fig. 7. Hier ist für zwei Abteilungen 30, 31 der Prozentsatz der unerledigten 32, der erledigten 33 und der noch offenen 34 Tätigkeiten graphisch dargestellt. Es ist ersichtlich, daß aus der Abteilung 31 Mitarbeiter abgezogen und in der Abteilung 30 eingesetzt werden können. Da alle Informationen betreffend offene Aufgaben in Echtzeit verfügbar sind und die Aufgabenpläne automatisch erzeugt und angezeigt werden, können die Mitarbeiter sofort in der neuen Abteilung 30 tätig werden.

Der Server 4 kann ferner an ein Materialverwaltungssystem angeschlossen sein oder die entsprechende Funktionalität selbst bereit stellen, um basierend auf den protokollierten und/oder geplanten Pflegemaßnahmen Materialbestellungen durchzuführen. Schließlich kann die geleistete Arbeit automatisiert abgerechnet werden.

Ein weiteres Einsatzgebiet der Erfindung sind Baustellen, insbesondere Großbaustellen. Hier sind mehrere Arbeiter mit verschiedenen Profilen gleichzeitig tätig, um eine Vielzahl von Arbeiten durchzuführen, die jeweils eine entsprechende Qualifikation erfordern und gegebenenfalls in einer bestimmten Reihenfolge erledigt werden müssen. Erfindungsgemäß erfolgt eine Koordination der Arbeiter, eine Kontrolle des Baufortschritts, eine Materialbeschaffung usw. mittels der tragbaren elektrisch selbstversorgten Datenhandgeräte auf ähnliche Weise wie im Fall des Seniorenheims.

So werden in einer Planungsphase Arbeitsabläufe gewerkebezogen und -übergreifend sowie qualifikationsbezogen und -übergreifend durch beteiligte Fachplaner unter Rückgriff auf einen Systemkatalog computergestützt geplant.

Vorarbeiter oder andere autorisierte Mitarbeiter rufen dann an mitgeführten Multimediahandgeräten Aufgabenlisten ab, die bezogen auf die jeweilige Qualifikation der betroffenen Mitarbeiter sowie den Baufortschritt und die Zeit automatisch aus den Arbeitsabläufen generiert werden. Durchgeführte Arbeiten werden als erledigt markiert und in Angriff genommenen Arbeiten können mit einem Arbeitsstandindikator versehen werden, der den Fortschritt der jeweiligen Aufgabe anzeigt. Können Aufgaben nicht erledigt werden oder treten bei deren Durchführung Probleme auf, z.B. Paß- oder Meßungenauigkeiten, Verzögerungen, Schäden etc., wird dies entsprechend protokolliert. Ferner kann eine Teil- oder Vollabnahme oder gegebenenfalls Mängelrüge einzelner Arbeiten erfolgen.

Die automatische flexible Zuordnung von Aufgaben zu Mitarbeitern gestattet eine effizientere Nutzung der Mitarbeiter auf der Baustelle. Der Leistungsstand kann kontrolliert, Mängel und Probleme können durch Auswerten der Kommentare erkannt und eine detaillierte Abrechnung der durchgeführten Arbeiten kann erleichtert werden. Die Erfindung ermöglicht somit eine Auswertung des Baufortschritts in Echtzeit. Zudem können Materiallieferungen entsprechend dem Baufortschritt just-in-time erfolgen. Hierbei werden Fehler durch fehlerhafte oder fehlende Weitergabe von Informationen vermieden.

## Patentansprüche

1. Verfahren zum Managen von an unterschiedlichen Objekten von Mitarbeitern auszuführenden Tätigkeiten in Echtzeit, bei dem
für jeden Mitarbeiter und für jede Tätigkeit jeweils ein Profil in einem Server (4) gespeichert wird, das die Berechtigung des Mitarbeiters für bestimmte Tätigkeiten bzw. Anforderungen an die Berechtigung des Mitarbeiters beschreibt,
Aufgabenpläne für durchzuführende Tätigkeiten entsprechend vorbestimmten Vorgaben computerunterstützt erstellt und im Server (4) gespeichert werden,
für jeden Mitarbeiter ein mitgeführtes, elektrisch selbstversorgtes, drahtlos mit dem Server (4) kommunizierendes Datenhandgerät (7), das jeweils ein Display (10) und eine Dateneingabevorrichtung aufweist, bereitgestellt wird, das objektbezogen aufgerufen im Display (10) offene Tätigkeiten des jeweiligen Aufgabenplans entsprechend dem Profil des betätigenden Mitarbeiters, dem Profil der Tätigkeiten und dem Abarbeitungsstatus anzeigt, und
von betätigenden Mitarbeitern durchgeführte Tätigkeiten als Erledigung in das Datenhandgerät (7) eingegeben, im Display (10) angezeigt, an den Server (4) weitergeleitet und dort dokumentarisch abgelegt werden,
wobei von einem Mitarbeiter als durchgeführt in ein Datenhandgerät (7) eingegebene Tätigkeiten anderen Mitarbeitern bei entsprechendem objektbezogenem Aufruf vom Server (4) zur Verfügung gestellt werden.

2. Verfahren nach Anspruch 1, bei dem die Aufgabenpläne unter Zugriff auf einen zentralen Systemkatalog (17) mit strukturiert abrufbaren Tätigkeiten zusammengestellt werden.

3. Verfahren nach Anspruch 1 oder 2, bei dem optisch zwischen offenen, erledigten und unerledigten Tätigkeiten unterschieden wird.

4. Verfahren nach einem der Ansprüche 1 bis 3, bei dem die Tätigkeiten eines Aufgabenplans in Zeilen (20) angezeigt werden, die bei offenen Tätigkeiten in einer neutralen Farbe, bei erledigten Tätigkeiten grün und bei unerledigten Tätigkeiten rot markiert werden.

5. Verfahren nach einem der Ansprüche 1 bis 4, bei dem zum Ändern des Status einer Tätigkeit der Status "erledigt" (23) und der Status "unerledigt" (24) zur Auswahl angezeigt werden.

6. Verfahren nach einem der Ansprüche 1 bis 5, bei dem einer Tätigkeit Bemerkungen handschriftlich und/oder als Sprachnotiz hinzugefügt werden.

7. Verfahren nach Anspruch 6, bei dem zu den Bemerkungen Strukturierungsvorschläge auf Basis der jeweiligen Tätigkeit zur Auswahl durch einen Mitarbeiter von einem Computer automatisiert vorgeschlagen werden.

8. Verfahren nach einem der Ansprüche 1 bis 7, bei dem erreichte Ziele aufgerechnet gegen unerreichte als Funktion der Zeit in einer Graphik auf einem Datenhandgerät (7) dargestellt werden.

9. Verfahren nach einem der Ansprüche 1 bis 8, bei dem auf Basis der dokumentarisch im Server (4) abgelegten Eingaben der Fortschritt der Abarbeitung der Aufgabenpläne für Objekte entsprechend vorgegebenen Kriterien, beispielsweise nach räumlicher Anordnung, in einer Graphik auf einem Datenhandgerät (7) angezeigt wird.

10. Verfahren nach einem der Ansprüche 1 bis 9, bei dem die dokumentarisch im Server (4) abgelegten Eingaben mit einem vorgegebenen Automatisierungsgrad zur Abrechnung der ausgeführten Tätigkeiten, zur Materialbeschaffung und/oder zur Dokumentation verwendet werden.

11. Verfahren nach einem der Ansprüche 1 bis 10, bei dem zur drahtlosen Kommunikation zwischen den Datenhandgeräten (7) und dem Server (4) ein lokales und/oder ein globales Funknetz verwendet wird.

12. Verfahren nach einem der Ansprüche 1 bis 11, bei dem Datenhandgeräte (7) verwendet werden, bei denen die Dateneingabevorrichtung und das Display (10) eine berührungsempfindliche Einheit bilden, die mittels eines Stifts (11) handschriftliche Eingaben ermöglicht.

13. Verfahren nach einem der Ansprüche 1 bis 12, bei dem den Objekten von den Datenhandgeräten (7) abfragbare Transponder zugeordnet werden.

14. Verfahren nach einem der Ansprüche 1 bis 13, bei dem der Ort der Datenhandgeräte (7) festgestellt wird.

15. Verfahren nach einem der Ansprüche 1 bis 14, bei dem der Server (4) zum Alarmieren eines Datenhandgeräts (7) unaufgefordert Daten an das Datenhandgerät (7) sendet.

16. Verfahren nach einem der Ansprüche 1 bis 15, bei dem der Einsatz von Mitarbeitern an zu betreuenden Personen in einem Seniorenheim (2) verwaltet wird.

17. Verfahren nach einem der Ansprüche 1 bis 16, bei dem eine Informationssammlung (12), eine Planung (13) von Aufgaben basierend auf gesammelten Informationen, eine Erfassung (14) durchgeführter Tätigkeiten unter Verwendung der Datenhandgeräte (7), eine Evaluation (15) der Wirksamkeit der durchgeführten Tätigkeiten nebst Anpassung der Planung und/oder eine Auswertung (16) der durchgeführten Tätigkeiten durchgeführt werden.

18. System zum Managen von an unterschiedlichen Objekten von Mitarbeitern auszuführenden Tätigkeiten in Echtzeit, bei dem
ein Server (4) mit jeweils einem Profil für jeden Mitarbeiter und für jede Tätigkeit, das die Berechtigung des Mitarbeiters für bestimmte Tätigkeiten bzw. Anforderungen an die Berechtigung des Mitarbeiters beschreibt, und mit entsprechend vorbestimmten Vorgaben computerunterstützt erstellten Aufgabenplänen für durchzuführende Tätigkeiten vorgesehen ist,
für jeden Mitarbeiter ein mitführbares, elektrisch selbstversorgtes, zur drahtlosen Kommunikation mit dem Server (4) ausgelegtes Datenhandgerät (7), das jeweils ein Display (10) und eine Dateneingabevorrichtung aufweist, vorgesehen ist, das zum Anzeigen von offenen Tätigkeiten eines Aufgabenplans für ein Objekt entsprechend dem Profil des betätigenden Mitarbeiters, dem Profil der Tätigkeiten und dem Abarbeitungsstatus in Reaktion auf einen objektbezogen Aufruf ausgestaltet ist,
die Datenhandgeräte (7) zum Anzeigen und Weiterleiten an den Server (10) von von betätigenden Mitarbeitern als Erledigung in das Datenhandgerät eingegebenen durchgeführten Tätigkeiten ausgestaltet sind und der Server (4) Mittel zum dokumentarischen Ablegen der Eingaben aufweist und so ausgestaltet ist, daß von einem Mitarbeiter als durchgeführt in ein Datenhandgerät (7) eingegebene Tätigkeiten anderen Mitarbeitern bei entsprechendem objektbezogenem Aufruf zur Verfügung gestellt werden.

19. System nach Anspruch 18, bei dem ein zentraler Systemkatalog (12) mit strukturiert abrufbaren Tätigkeiten zum Zusammenstellen der Aufgabenpläne vorgesehen ist.

20. System nach Anspruch 18 oder 19, das zum optisch unterschiedlichen Anzeigen offener, erledigter und unerledigter Tätigkeiten ausgestaltet ist.

21. System nach einem der Ansprüche 18 bis 20, das zum Anzeigen der Tätigkeiten eines Aufgabenplans in Zeilen (20) derart ausgestaltet ist, daß die offenen Tätigkeiten in einer neutralen Farbe, die erledigten Tätigkeiten grün und die unerledigten Tätigkeiten rot markiert sind.

22. System nach einem der Ansprüche 18 bis 21, das zum Anzeigen des Status "erledigt" (23) und des Status "unerledigt" (24) zur Auswahl beim Ändern des Status einer Tätigkeit ausgestaltet ist.

23. System nach einem der Ansprüche 18 bis 22, bei dem die Dateneingabevorrichtung eine Handschrifterkennung und/oder eine akustische Aufnahmevorrichtung zum Erfassen einer Bemerkung aufweist.

24. System nach Anspruch 23, bei dem ein Dokumentierungskatalog mit Dokumentierungsvorschlägen vorgesehen ist.

25. System nach einem der Ansprüche 18 bis 24, das zur drahtlosen Kommunikation zwischen den Datenhandgeräten (7) und dem Server (4) mit einem lokalen und/oder einem globalen Funknetz verbunden ist.

26. System nach einem der Ansprüche 18 bis 25, bei dem die Dateneingabevorrichtung und das Display (10) eine berührungsempfindliche Einheit für handschriftliche Eingaben sind.

27. System nach einem der Ansprüche 18 bis 26, bei dem den Objekten von den Datenhandgeräten (7) abfragbare Transponder zugeordnet sind.

28. System nach einem der Ansprüche 18 bis 27, bei dem der Ort der Datenhandgeräte (7) feststellbar ist.

29. System nach einem der Ansprüche 18 bis 28, bei dem der Server (4) zum unaufgeforderten Senden von Daten an das Datenhandgerät (7) ausgestaltet ist.

30. System nach einem der Ansprüche 18 bis 29, das zum Verwalten des Einsatzes von Mitarbeitern an zu betreuenden Personen in einem Seniorenheim (2) ausgestaltet ist.

31. Elektrisch selbstversorgtes Datenhandgerät (7) mit einem Display (10) und einer Dateneingabevorrichtung zur drahtlosen Kommunikation mit dem System nach einem der Ansprüche 18 bis 30, das zum Anzeigen der offenen Tätigkeiten eines Aufgabenplans eines das Datenhandgerät (7) mitführenden und dieses objektbezogen aufrufenden Mitarbeiters entsprechend dem Profil des betätigenden Mitarbeiters, dem Profil der Tätigkeiten und entsprechend dem Abarbeitungsstatus, und zum drahtlosen Weiterleiten mittels der Dateneingabevorrichtung vom betätigenden Mitarbeiter als durchgeführt eingebbarer Tätigkeiten an einen Server (4) zum dokumentarischen Ablegen darin ausgestaltet ist.

32. Datenhandgerät nach Anspruch 31, bei dem die Dateneingabevorrichtung und das Display (10) eine berührungsempfindliche Einheit sind, die mit einem Stift (11) bedienbar ist, und eine Handschrifterkennung vorgesehen ist.

33. Datenhandgerät nach Anspruch 31 oder 32, bei dem offene, erledigte und unerledigte Tätigkeiten optisch unterschiedlich anzeigbar sind.

34. Datenhandgerät nach einem der Ansprüche 31 bis 33, das zum Anzeigen der Tätigkeiten eines Aufgabenplans in Zeilen (20) derart ausgestaltet ist, daß die offenen Tätigkeiten in einer neutralen Farbe, die erledigten Tätigkeiten grün und die unerledigten Tätigkeiten rot markiert sind.
